# EUROPEAN PATENT APPLICATION

(11) **EP 1 962 022 A2**
(43) Date of publication of application: **27.08.2008**
(21) Application number: 07380248.0
(22) Date of filing: 11.09.2007
(51) Int. Cl.: F24D 3/10, F24D 19/10, F24H 9/14

(54) **Box for distribution, metering and production of sanitary water and heating**

(30) Priority: 13.09.2006 ES 200602015 U
(71) Applicant: Leako, S.A., 48014 Bilbao (Viizcaya) (ES)
(72) Inventor: Eiguren Mendiguren, Santiago, 48007 Bilbao (ES); Eiguren Aldanondo, Jakoba, 48014 Bilbao (ES)
(74) Representative: Ungria Lopez, Javier

(57) **Abstract**

The box (1) comprises a compact module attached to a wall of the building in which it is applied (groups of individual houses, offices, blocks of community flats, etc.) incorporating in its interior the necessary equipment, both hydraulic and electric, for each home, permitting adequate distribution to be carried out of sanitary hot and cold water, along with heating, and including metering and controlling the volume of water consumed by each home. The box can be fitted with equipment in which one, two or more consoles can be established, each one of which will give a service to a home. The box (1) is accessed by the general pipes (4, 5 and 6) for the supply of sanitary cold water, along with individual branches for hot and cold water (7 and 8), and for the heating circuit (48 and 49), for each home. Also fitted in the box (1), in the corresponding branches (4', 5' and 6') coming from the general pipes (4, 5 and 6), are the necessary components for the functioning of the installation, these components corresponding to distribution collectors (34), regulation and control valves (13, 17, 19, 25, 26 and 30), temperature sensors (21, 29, 35), meters (23 and 39), heat exchanger (18) and regulation and metering cards (40).

## Description

### OBJECT OF THE INVENTION

As stated in the title of this descriptive specification, the present invention relates to a box for distribution, metering and production of sanitary water and heating, which incorporates for this all the hydraulic and electrical installations necessary for each home, obtaining a modular, compact solution. This box has been conceived to facilitate and simplify the installation in position and its subsequent maintenance, with all its inspection points being outside of the home. It also achieves a reduction in space with respect to that occupied by conventional solutions.

The object of the invention is to provide a compact and modular assembly which allows the distribution, metering and control of sanitary water (hot and cold) and heating, with the benefits of a centralised installation, large production of hot water, saving and safety, along with the advantages of an individual installation, independence, functioning and rationalisation in the sharing out of expenses.

### PRIOR ART OF THE INVENTION

Conventional solutions currently offered by the market for the production of hot water and heating can be summarised in two: installations with individual boiler and centralised production installations, which present a series of characteristics.

Individual installations are flexible in their functioning and in a rational sharing out of the expenses, but on the other hand they present problems concerning safety, low production of hot water and low control of maintenance. From the point of view of installing the boilers within the home and also the installation of chimneys, it is always complicated.

In the same way, centralised installations offer a high production of hot water and safety but they lack flexibility in the functioning of the heating with all the residents being subjected to the same timetable, and the sharing out of the expenses is also complicated. In terms of construction, a boiler room is required with large storage tanks plus large spaces in the landings of the stairwell in order to install the meters.

The type of installation to which the box forming the inventive object applies is a combined solution of the solutions mentioned above, obtaining the best characteristics of each of them: flexibility and a rational sharing out of expenses along with a large production of hot water and safety. The box forming the inventive object houses, in a modular, compact and ordered manner, the equipment needed for providing the services of production, metering and regulation of hot water and heating, for this solution.

### DESCRIPTION OF THE INVENTION

The inventive box for distribution and production is intended for being installed in blocks of flats or offices or groups of individual houses, whether they be newly constructed or undergoing renovation, being preferably conceived for being installed on the landings of stairwells in the building, as equipment for providing a service for one, two, three or more consoles, a console being understood as the set of equipment necessary for the production, regulation and metering of hot water and heating services needed for providing a service for a home.

The distribution box is supplied from a boiler room whose function it is to maintain a single closed circuit with sufficient pressure and temperature available for homes as primary energy. The boiler room is provided with the necessary pumps and boilers, all of them controlled by a regulator. Both the regulation module for boilers and the regulators for the home are connected to a main management module. This module carries out a continual recording and control of the fundamental parameters of the installation, along with the management of the communications for remote access to it.

In terms of the structural characteristics and components of the distribution box forming the object of the invention, it is characterised by being created starting from a metallic body, preferably made of galvanised sheet, in which two well-differentiated zones or parts are established, preferably separated from each other, one of which zones or parts is located at the rear facing the wall on which it is fixed and the other is located facing the user or the front part.

In the rear part or zone, in other words that facing the wall, all the general distribution pipes are to be found, both for the primary circuit (outward and return) and the general stanchion for the cold water supply, along with the individual distribution pipes to each home, this zone being thermally insulated. Mounted in the zone located facing the user, in their corresponding branches and one per home, are initially the hydraulic test bridges and in later phases of the work the necessary and most sensitive components for the functioning of the installation, valves, temperature sensors, volumetric sensors or water meters, heat exchangers, regulation and metering card, etc. This entire array of apparatus is what we refer to as the console, in such a way that the pipes going to each home, both for water and for heating, have to start from the same console.

The general piping for cold water coming from the water supply for the building and the pipes for the primary circuit, from the boiler room, are joined to the general pipes already incorporated in the boxes. Exiting from these general pipes are the branches for each console, each one of them providing a service to a home.

From the general stanchion for cold water, there exits a branch for each console: first of all a general cut-off valve for cold water, after which is fitted a bridge, which is replaced once the work has been assembled for a volumetric meter for cold water consumption. Said branch, after the bridge and, as the appropriate, after the meter, divides into two sub-branches, one corresponding to sanitary cold water for direct consumption, with a cut-off valve, and the other connected to a bridge which, after the hydraulic test, is replaced by a heat exchanger in order to obtain sanitary hot water. A temperature sensor is included at the exit from the exchanger.

The branch deriving from the return pipe for the primary circuit (hot water) incorporates a cut-off valve and is joined via a bridge to the heating return. Following the hydraulic test, this bridge is eliminated and is replaced with a collector with a sensor which divides into two sub-branches, one of them with a cut-off valve and a regulation valve for distribution of the heating water, and the second branch with a regulation valve connected to the primary of the exchanger.

In the same way, the branch coming from the return pipe for the primary circuit incorporates a valve and is joined via a bridge to the heating return. Following the hydraulic test, this bridge is eliminated and a heat volumetric meter is installed for hot water from the primary circuit, joined to a collector with a sensor incorporated to which is joined the heating returns and the primary return from the exchanger.

Combining together the value provided by the outward sensor, the return sensor and the heat volumetric meter, one obtains the quantity of energy contributed and consumed by the home, whether this be in heating or in hot water production.

Each console is complemented with an electronic card which gathers all the information and controls the functioning of the service, which is connected to a terminal in the interior of each user's home, offering him or her the possibility of individual programming of their heating, water temperature and consultation of consumption of both water and energy. The console cards are in turn linked up by means of a bus as far as the main manager, thereby permitting remote management of the installation.

The pipes for consumption water, in other words, for hot and cold water, exit via the upper part of the box to each home, while those for the outward and return heating exit via the lower part.

In terms of the form of mounting the box, it will be fastened to a wall by means of being suspended from rods emerging from a support duly attached to the wall. These rods have their ends threaded and can pass through holes made in a vertical and upper-rear extension of the box, the final extension being made by means of threaded nuts on the free front ends of the said suspension rods. The boxes, in the same vertical, are joined together with junction tubes, one for the general piping, outward, return and cold water, thereby creating the general vertical distribution pipes.

The structural characteristics and conception of the box that has been described gives rise to a series of advantages among which the following can be summarised:
- Ease and rationality in the mounting, facilitating mounting in position, offering a compact and modular solution which solves the problems of distributing the services of hot water, cold water and heating.
- High production of hot water and energy saving.
- Safety, no kind of combustion takes place in the home.
- Remote control of the installation, which permits effective maintenance to be carried out, both corrective and preventive.
- Control in real time, on the part of the user, over the expenses incurred, data which, given the connectivity of the system, is processed automatically for the generation of bills.
- Achievement of all the advantages corresponding to individual installations, such as independence of functioning and rationalisation in the distribution of expenses, permitting each user to know in real time the energy and water consumption from inside the home.

### BRIEF DESCRIPTION OF THE DRAWINGS

In order to complete the description that is going to be made forthwith and with the aim of aiding a better understanding of the characteristics of this invention, this specification is accompanied by a set of drawings on the basis of which the innovations and advantages of the sanitary water and heating distribution box embodied according to the object of the invention will be more easily understood. Specifically, and by way of example, a distribution with three consoles or installations has been represented, for supplying three homes.

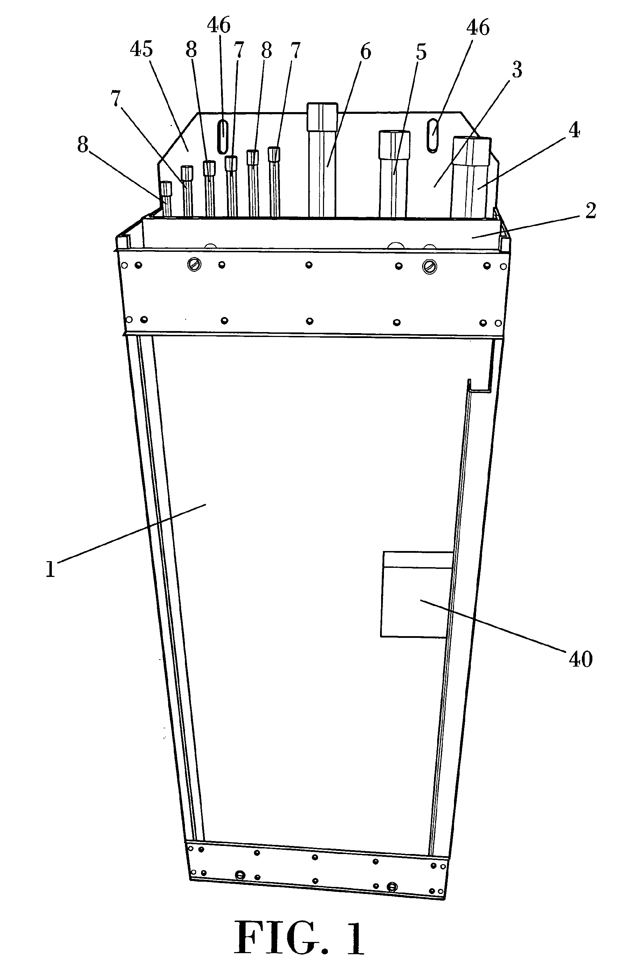

**Figure 1****.-** Shows a front perspective view of a form of embodiment of the box of the invention, without the sanitary hot water production elements, heating controls and sanitary hot water, nor the consumption metering system, in which all that can be seen are the general pipes for the primary circuit and water distribution for each home, emerging from the top via the rear zone or part of the box.
**Figure 2****.-** Shows a front diagram of the box represented in the previous figure with the general pipes, both upper and lower, along with the installation of the branches for cold water, hot water and return located in the front part of the box, prior to fitting the different functioning components.
**Figure 3****.-** Shows a perspective view like that of the previous figure, but with the different parts of the branches represented in figure 2 being shown in exploded view, along with valves, meters, collectors, etc., all this in a situation of coupling for achieving the final assembly.
**Figure 4****.-** Shows a perspective view of the assembly corresponding to all the components represented in the previous figure.
**Figure 5****.-** Shows the flow diagram of a console of the kind that can incorporate the box of the invention, in which can be seen the general distribution pipes emerging from the corresponding boiler room.
**Figure 6****.-** Shows a schematic and sideways view of the mounting of two boxes on a wall, being associated together via junction tubes, with a detail being shown on a greater scale of the form of suspension and attachment of the said boxes.

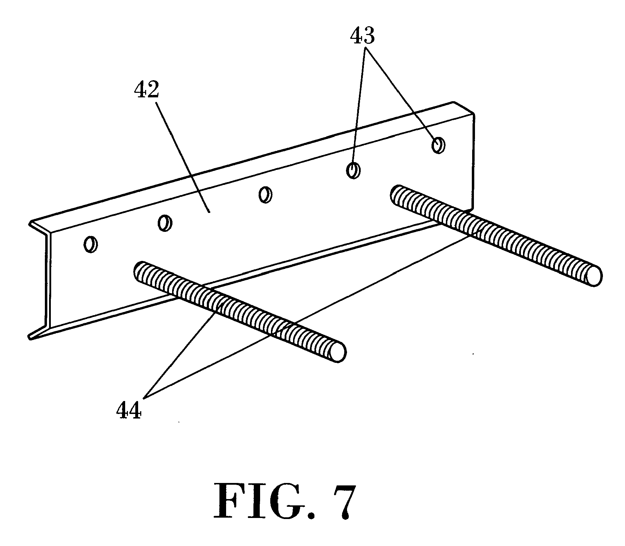

**Figure 7****.-** Shows a perspective view of the support for attachment to the wall, on which the box of the invention is suspended and supported.

### DESCRIPTION OF THE PREFERRED FORM OF EMBODIMENT

With the commented figures in view, it can be seen how the distribution box forming the object of the invention is created by means of a metallic body 1 in which two well-differentiated zones or parts are established, a front one 2 for the user and another rear one 3 facing the wall, in such a way that via the latter the general pipes corresponding to the primary circuit, hot water, outward 5 and return 6, and for cold water 4 , pass vertically and emerge in both ends, in such a way that in the rear zone or part 3, preferably in its upper end, the pipes 7 and 8 are allowed to be seen corresponding to cold water and hot water, and belonging to three consoles or installations, corresponding to as many individual homes.

In the same way, via the lower end of the rear part can be seen the outward 48 and return 49 hot water pipes, corresponding to the heating of three consoles or homes.

The general pipes, 4, 5 and 6, come from a boiler room 9 where the respective boilers 10 are provided, along with the water impulsion pumps 11 and 12, with the complement of the respective cut-off values, differential pressure regulator, etc. The object of the boiler room is to maintain a primary circuit (outward, return) at a sufficient temperature and differential pressure so that the consoles can produce and distribute the hot water and heating services, with the most suitable hydraulic layout being designed for this according to the case.

The general piping for cold water 4 does not need to be centralised, like that for the outward and return hot water, and it can consist of an individual pipe to each home connected to the respective valve, from the general collector.

As has already been stated, the distribution box 1 is preferably located in the landing of the stairwell for the building, generally in a group of two or three consoles, even being able to be a single console or more than three consoles corresponding to the distribution installations for each home.

The general pipes for the primary circuit, 5 and 6, and that for the cold water 4 run via the rear part 3 of the box, with branches 4', 5' and 6' emerging from them to the front part 2 of the box 1, in other words, to the part facing the user.

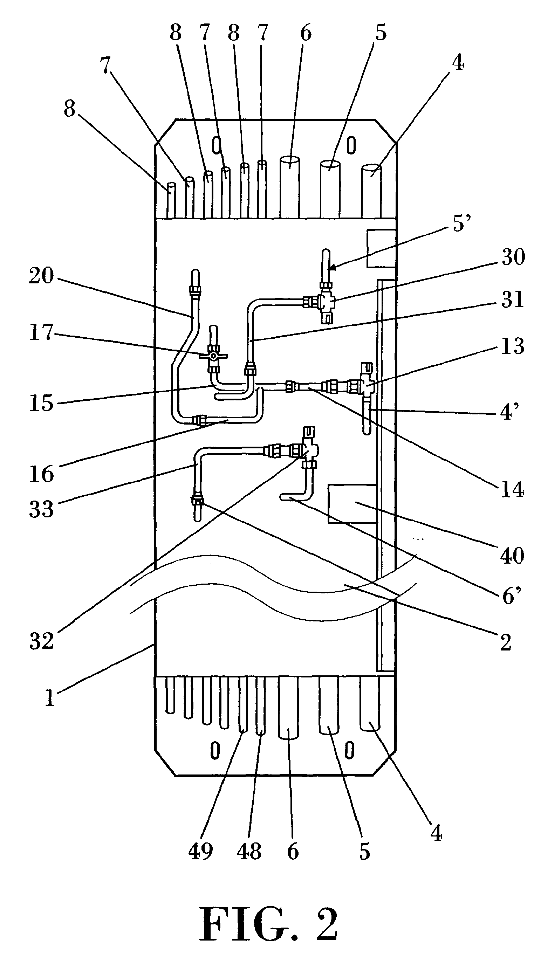

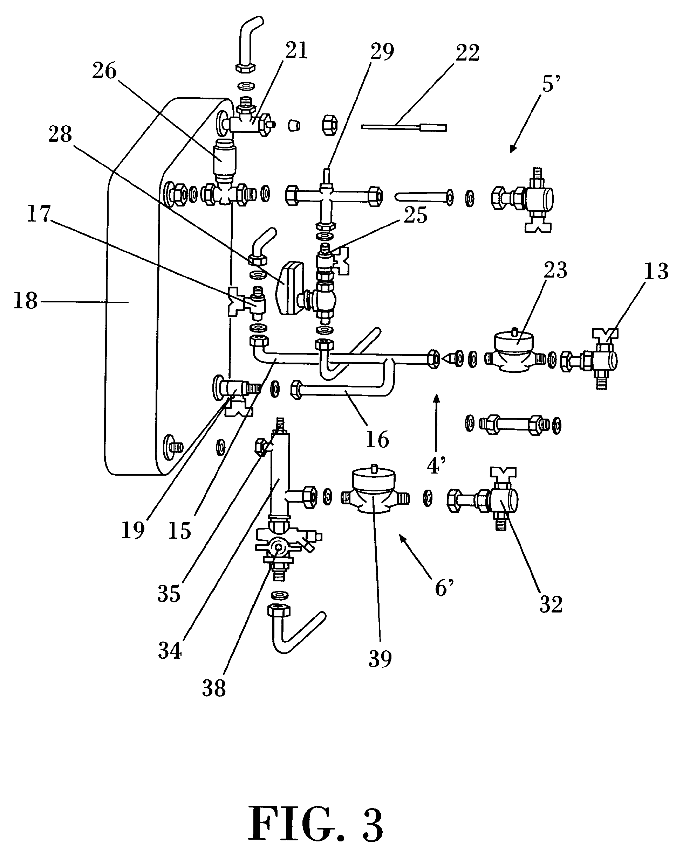

Figure 2 shows in diagrammatic form the box of a console as mounted in position, prior to introducing the control, measurement and production equipment. In it can be seen the already mentioned general pipe and the branches 4', 5' and 6' which access the front part 2 of that box 1, the branch 4' for cold water including a general cut-off valve 13 for sanitary water, after which a bridge 14 has been provided, following which said branch 4' for cold water divides into two branches 15 and 16, the first of them intended for the supply of sanitary cold water for direct consumption, that sub-branch 15 incorporating a general cut-off valve for cold water 17. Those branches 15 and 16 constitute a cold water collector for direct consumption and for the later connection to a heat exchanger 18, with the interposition of a general cut-off valve for hot water 19, incorporating a bridge 20 destined for being replaced by a heat exchanger in order to obtain sanitary hot water, which exits via the reference 21 of figure 3, this hot water sub-branch including a temperature sensor 22.

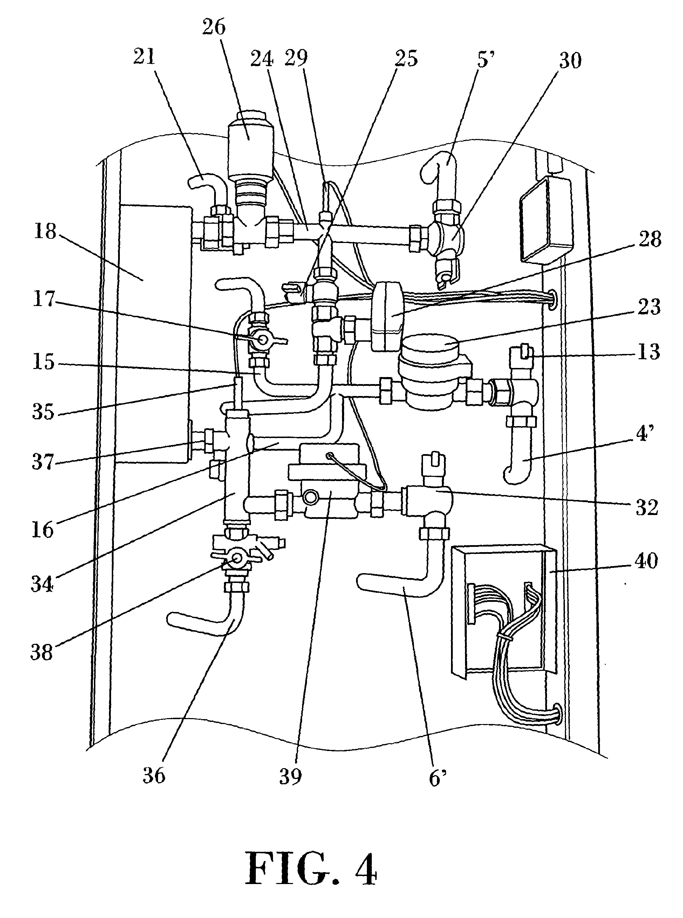

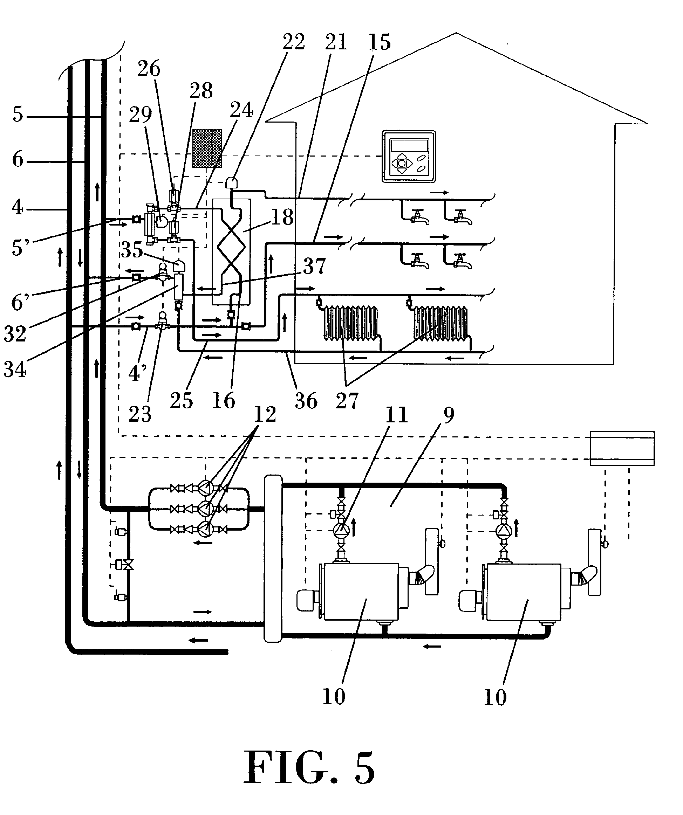

The bridge 14 for the cold water branch 4' is intended to be replaced with a water meter 23, as represented in figures 3 and 4, while in figure 5 the flow diagram can be seen, where the cold water branch 4', coming after the meter 23, divides into the sub-branches 15 and 16, already commented on.

For its part, the branch 5' which exits from the general piping for the hot water return 5, includes first of all a valve 30, starting from which there exists a bridge 31 destined for being replaced by a collector which branches off to a cut-off valve 25 and a regulation valve 28 for the distribution of the heating water to the corresponding radiators 27. In turn, the branch 5' splits into another sub-branch 24 which is connected to the heat exchanger 18, and in which provision has likewise been made for another regulation valve 26, with a temperature sensor 29 having been fitted in the general collector for this primary circuit.

The branch 6' coming from the general return piping 6 includes a valve 32, starting from which is established a bridge 33 intended to be replaced by a collector 34, with a temperature sensor 35, from which collector 34 the branch 6' divides into two sub-branches 36 and 37, the latter for its connection to the heat exchanger 18 and the other for collecting the heating water corresponding to the return of the radiators 27, there existing a cut-off and regulation valve 38 as in all the previous cases. In this circuit provision has been made for a volumetric meter for water 39 which, as with the meter 23 for the cold water circuit, is planned to permit the consumption to be known of water in the primary circuit and sanitary water, respectively.

The distribution box that has been described, which, as has already been stated, corresponds to one console, includes an electronic card 40 intended to gather all the information and to control the functioning of the unit. The main data gathered are those for consumption of sanitary water and for the primary circuit, provided by meters 23 and 39, along with data from the temperature sensors 29 and 35 which provide the control card 40 with information on temperature difference and water volume, which card, after combining these values, calculates the energy consumption both in water heating and in heating.

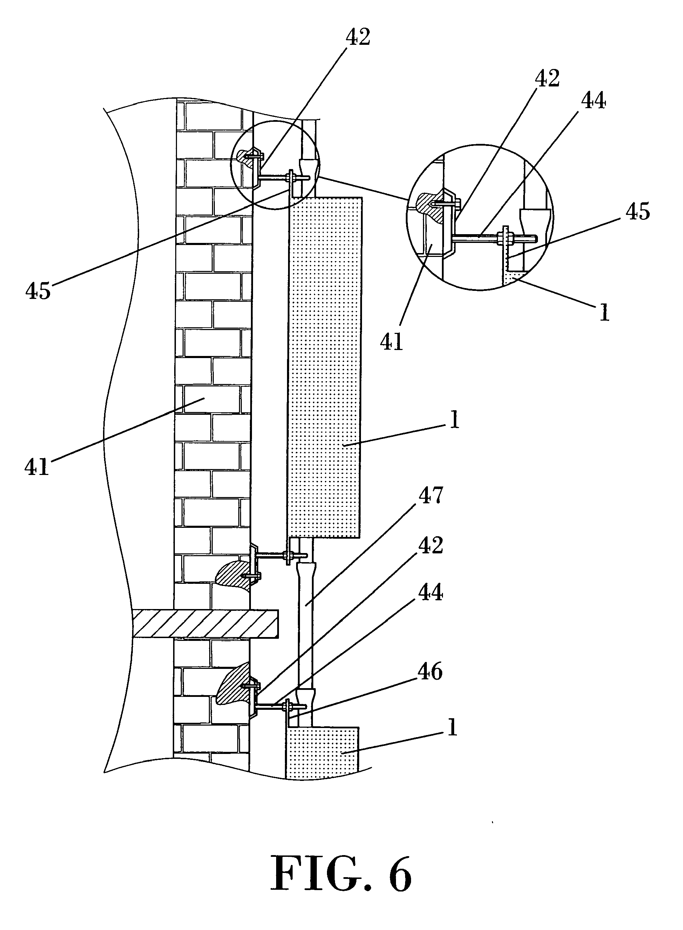

Moreover, the said box is intended to be attached to a wall, specifically like that referenced with number 41 in figure 6, in which two boxes have been provided at different levels, and more specifically suspended, from a support 42 attached to the wall 41, via screws which pass through holes 43 made for the purpose in the support 42, from which emerge towards the front separate threaded rods 44 which pass through holes 46 for the purpose in an upper and lower vertical extension 45 of the rear part of the actual box 1, in such a way that once the corresponding box 1 is suspended from the rods 44, the fastening and final alignment is carried out by means of nuts threaded on the rods 44.

Finally, it can be said that the boxes 1 located vertically at different levels, as represented in figure 6, are linked to each other via junction tubes 47 in order to connect the pipes of the different boxes located at different levels.

## Claims

1. **BOX FOR DISTRIBUTION, METERING AND PRODUCTION OF SANITARY WATER AND HEATING**, which, being intended for its preferable application in blocks of flats or offices or groups of individual houses, and intended for the distribution of sanitary water, production of hot sanitary water and heating, with each box being able to combine one, two, three or more consoles, a console being understood as the set of equipment necessary for the production, regulation and metering of hot water and heating services, is **characterised in that** it is created starting from a body (1), preferably metallic, and intended for being mounted and attached to a wall of the building, with two parts or zones being established **in that** body (1), a rear one (3) facing the wall, and the other font one (2) facing the user; provision having been made so that located on and passing via the rear zone or part (3) are the general pipes (4, 5 and 6) for the supply of sanitary cold water and for the outward and return primary circuit, respectively, and the individual branches of each console to a home, sanitary cold and hot water (7 and 8), and heating outward and return pipes (48 and 49), while mounted on the front zone (2) of the box (1), via the corresponding branches (4', 5' and 6') coming from the general distribution pipes (4, 5 and 6), are the necessary components for functioning of the actual installation, said components being materialised in distribution collectors, regulation and cut-off valves, temperature sensors, meters, heat exchangers and regulation and metering cards; with the particular feature that the branch (4') corresponding to the cold water to the building incorporates a water meter (23) from which said branch (4') divides into two sub-branches (15 and 16), one for distribution of cold water for consumption and the other connected to the corresponding heat exchanger (18), in which heating of the sanitary water takes place by transfer of heat from the hot water coming from the primary circuit, for which the outward branch (5') of the primary circuit divides into two sub-branches (24 and 25), the first of them connected to the heat exchanger (18) and the second being intended for the distribution of heating water, in such a way that the return water coming from the individual distribution of the heating and the return from the heat exchanger go back to the general return pipe (6) of the primary circuit via the branch (6').

2. **BOX FOR DISTRIBUTION, METERING AND PRODUCTION OF SANITARY WATER AND HEATING**, according to claim 1, **characterised in that** the branches (4') for cold water, (5') return for the circuit and (6') return for the primary circuit, provided in the front zone (2) of the box (1), include bridges (14), (20), (31) and (33), respectively, mounted during the fitting in order to allow the pertinent hydraulic tests to be conducted, said bridges being later on replaced by particular components such as meters (23) and (39), and collector (34) for the return circuit.

3. **BOX FOR DISTRIBUTION, METERING AND PRODUCTION OF SANITARY WATER AND HEATING**, according to claims 1 and 2, **characterised in that** the branch (4') corresponding to cold water, provided in the front zone (2) of the box (1), incorporates in addition to the cold water meter (23) and corresponding distribution collector, also cut-off valves for cold water (13 and 17) and cut-off valve for hot water (19) which feeds the exchanger, which has a sensor (21) at its outlet.

4. **BOX FOR DISTRIBUTION, METERING AND PRODUCTION OF SANITARY WATER AND HEATING**, according to claims 1 and 2, **characterised in that** the branch (5') corresponding to return hot water for the primary circuit, after passing through a cut-off valve (30), divides towards the heat exchanger, passing through the cut-off (25) and regulation (26) valve and the temperature sensor (29), and towards the individual distribution for heating water.

5. **BOX FOR DISTRIBUTION, METERING AND PRODUCTION OF SANITARY WATER AND HEATING**, according to claims 1 and 2, **characterised in that** the branch (6') corresponding to the return for the primary circuit, returns via the collector (34) and the volumetric meter (39) passing through the sensor (35), coming from the return of the heat exchanger and from the return of the individual distribution for the heating.

6. **BOX FOR DISTRIBUTION, METERING AND PRODUCTION OF SANITARY WATER AND HEATING**, according to previous claims, **characterised in that** the sanitary cold water (7) and hot water (8) outlets of the individual distribution exit via the upper rear part of the box (1), and the individual distribution outlets for the outward (48) and return (49) heating do so via the lower rear part.

7. **BOX FOR DISTRIBUTION, METERING AND PRODUCTION OF SANITARY WATER AND HEATING**, according to previous claims, **characterised in that** the volumetric valves and the temperature sensors for each console are joined to an electronic card (40) which can in turn be linked to a terminal inside the home of each user of the console, for control and regulation of the installation.

8. **BOX FOR DISTRIBUTION, METERING AND PRODUCTION OF SANITARY WATER AND HEATING**, according to previous claims, **characterised in that** the box body (1), in its upper and lower rear part, presents a vertical extension (45) with holes (46) for the suspension and attachment of said box (1) with respect to threaded rods (44) emerging from the front of a support (42) attached to the corresponding wall (41), being complemented with threaded nuts on the free front ends of said rods (44) for establishing the final attachment of the box (1).

9. **BOX FOR DISTRIBUTION, METERING AND PRODUCTION OF SANITARY WATER AND HEATING**, according to previous claims, **characterised in that** each box is complemented with a vertical junction tube (47) for the joining of the pipes of the primary circuit of each box (1) with the adjacent upper and lower boxes, thus creating the general verticals.
